(19)

Europäisches
Patentamt
European
Patent Office
Office européen
des brevets

(11) **EP 2 448 287 A1**

(12) **EUROPEAN PATENT APPLICATION**

(43) Date of publication:
 **02.05.2012 Bulletin 2012/18**

(51) Int Cl.:
*H04N 21/2343* (2011.01)    *H04N 21/431* (2011.01)
*H04N 21/485* (2011.01)    *H04N 21/443* (2011.01)
*H04N 7/26* (2006.01)    *H04N 7/15* (2006.01)
*H04N 21/4788* (2011.01)    *H04N 21/61* (2011.01)

(21) Application number: **11185565.6**

(22) Date of filing: **18.10.2011**

(84) Designated Contracting States:
 **AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
 **BA ME**

(30) Priority: **29.10.2010 JP 2010243394**

(71) Applicant: **Sony Corporation
Tokyo 108-0075 (JP)**

(72) Inventor: **Fujimoto,, Yuji
Minato-ku, Tokyo 108-0075 (JP)**

(74) Representative: **Lewis, Darren John
D Young & Co LLP
120 Holborn
London EC1N 2DY (GB)**

(54) **Image processing device, image processing method, and image processing system**

(57)    Disclosed herein is an image processing device including: a generating section, a plurality of pieces of stream data with different display sizes being created in advance for each of a plurality of video contents, configured to generate stream data of one stream of a multiple video reproduced image for simultaneously displaying not smaller than two video contents selected from the plurality of video contents by performing parameter transcoding using the stream data created in advance.

FIG.4

EP 2 448 287 A1

**Description**

The present disclosure relates to an image processing device, an image processing method, and an image processing system, and particularly to an image processing device, an image processing method, and an image processing system for providing a multiple video reproducing system with a light processing load and a little degradation in image quality.

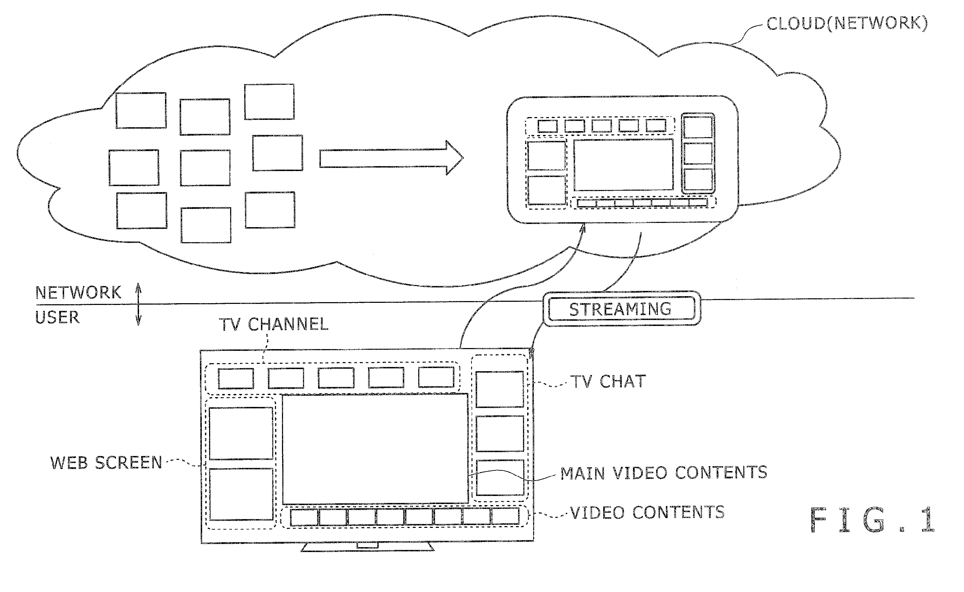

Due to progress in digitization of contents and the development of an infrastructure that can transmit video, video distribution through the Internet is spreading. Recently, in addition to personal computers, television receivers capable of network connection have been increasing as receiving side devices, and therefore it has become possible to view distributed video contents on a television receiver. In addition, recently, due to the development of cloud services, various channels including private contents have been provided to viewers via a network. Thus, there has been an increasing need for a multiple video reproducing system that makes it possible to view a plurality of video contents simultaneously and search easily for a video content desired to be viewed, as shown in FIG. 1.

In the multiple video reproducing system of FIG. 1, a multiple video reproduced image displayed on a screen is formed by a plurality of video contents. Of the plurality of video contents displayed, a main video content as a video content to be viewed mainly is disposed at the center of the screen in a maximum size. The other video contents that can be selected (changed) are arranged around the main video content in sizes smaller than that of the main video content. The selectable video contents are for example TV broadcasting channels, Web screens, video contents of movies and the like, and TV chat screens, and are for example obtained from within a cloud (network).

A first method for realizing the display of such a multiple video reproduced image is a method having a plurality of streams respectively corresponding to a plurality of video contents distributed from servers within the cloud. A device on a client side receives and decodes the plurality of streams, performs a synthesizing process, and generates a multiple video reproduced image. Japanese Patent Laid-Open No. 2002-064818, for example, discloses a multiple video reproduced image in which of a plurality of ESs (Elementary Streams) received, an ES given high priority is assigned a display region with a large area on the basis of display priority.

However, there is a problem in that a rather wide transmission band is necessary to distribute a plurality of streams. In addition, because the device on the client side needs to have capabilities to decode the plurality of streams simultaneously and perform the synthesizing process, another problem in terms of cost occurs in that the receiver becomes expensive.

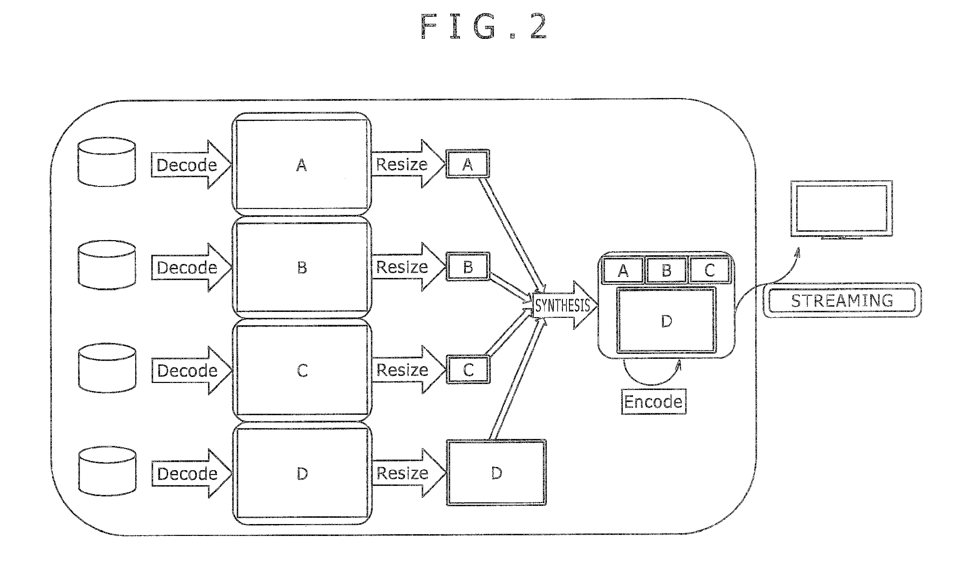

A second method for realizing the display of another multiple video reproduced image is a method of generating a multiple video reproduced image as one stream on a server side and distributing the stream, as shown in FIG. 2. In this case, the server creates the stream data of one stream by once decoding a plurality of video contents to be synthesized (Decode) and coding the video contents again (Encode) after a size change (Resize) and an image synthesis. Thus, a load on the server is increased considerably because the server performs the processes of decoding each video content, making the size change, and performing the image synthesis and the recoding. In addition, there is a fear of a degradation in image quality as a result of performing decoding once and performing recoding.

The present disclosure has been made in view of such a situation. It is desirable to provide a multiple video reproducing system with a light processing load and a little degradation in image quality.

Various respective aspects and features of the invention are defined in the appended claims. Combinations of features from the dependent claims may be combined with features of the independent claims as appropriate and not merely as explicitly set out in the claims.

According to a first embodiment of the present disclosure, there is provided an image processing device including a generating section, a plurality of pieces of stream data with different display sizes being created in advance for each of a plurality of video contents, configured to generate stream data of one stream of a multiple video reproduced image for simultaneously displaying not smaller than two video contents selected from the plurality of video contents by performing parameter transcoding using the stream data created in advance.

According to the first embodiment of the present disclosure, there is provided an image processing method including, a plurality of pieces of stream data with different display sizes being created in advance for each of a plurality of video contents, generating stream data of one stream of a multiple video reproduced image for simultaneously displaying not smaller than two video contents selected from the plurality of video contents by performing parameter transcoding using the stream data created in advance.

In the first embodiment of the present disclosure, a plurality of pieces of stream data with different display sizes are created in advance for each of a plurality of video contents, and stream data of one stream of a multiple video reproduced image for simultaneously displaying two or more video contents selected from the plurality of video contents is generated by performing parameter transcoding using the stream data created in advance.

According to a second embodiment of the present disclosure, there is provided an image processing device wherein stream data of one stream of a multiple video reproduced image for simultaneously displaying a plurality of video contents, the stream data being created by parameter transcoding using stream data of the plurality of video contents, is received, and a predetermined displaying section is made to display the multiple video reproduced image on a basis of the received stream data of one stream of the multiple video reproduced image.

According to the second embodiment of the present disclosure, there is provided an image processing method including: receiving stream data of one stream of a multiple video reproduced image for simultaneously displaying a plurality of video contents, the stream data being created by parameter transcoding using stream data of the plurality of video contents; and making a predetermined displaying section display the multiple video reproduced image on a basis of the received stream data of one stream of the multiple video reproduced image.

In the second embodiment of the present disclosure, stream data of one stream of a multiple video reproduced image for simultaneously displaying a plurality of video contents, the stream data being created by parameter transcoding using stream data of the plurality of video contents, is received, and a predetermined displaying section is made to display the multiple video reproduced image on a basis of the received stream data of one stream of the multiple video reproduced image.

According to a third embodiment of the present disclosure, there is provided an image processing system including: a server device; and a client device. The server device includes a generating section configured to, a plurality of pieces of stream data with different display sizes being created in advance for each of a plurality of video contents, generate stream data of one stream of a multiple video reproduced image for simultaneously displaying not smaller than two video contents selected from the plurality of video contents by performing parameter transcoding using the stream data created in advance and a transmitting section configured to transmit the stream data of one stream of the multiple video reproduced image, the stream data being generated by the generating section, to the client device. The client device includes a receiving section configured to receive the stream data of one stream of the multiple video reproduced image, the stream data being transmitted by the transmitting section, and a display controlling section configured to make a predetermined display section display the multiple video reproduced image on a basis of the received stream data of one stream of the multiple video reproduced image.

In the third embodiment of the present disclosure, in the server device, a plurality of pieces of stream data with different display sizes is created in advance for each of a plurality of video contents, stream data of one stream of a multiple video reproduced image for simultaneously displaying two or more video contents selected from the plurality of video contents is generated by performing parameter transcoding using the stream data created in advance, and the stream data of one stream of the multiple video reproduced image is transmitted to the client device. In the client device, the stream data of one stream of the multiple video reproduced image, the stream data being transmitted from the server device, is received, and a predetermined display section is made to display the multiple video reproduced image on a basis of the received stream data of one stream of the multiple video reproduced image.

According to the first to third embodiments of the present disclosure, it is possible to provide a multiple video reproducing system with a light processing load and a little degradation in image quality.

Embodiments of the invention will now be described with reference to the accompanying drawings, throughout which like parts are referred to by like references, and in which:

FIG. 1 is a diagram of assistance in explaining a multiple video reproducing system;
FIG. 2 is a diagram showing an example of distributing a multiple video reproduced image as one stream;
FIG. 3 is a block diagram showing an example of configuration of one embodiment of a multiple video reproducing system to which the present technology is applied;
FIG. 4 is a diagram of assistance in explaining a method of generating a multiple video reproduced image to which the present technology is applied;
FIG. 5 is a conceptual functional block diagram of the generation of a multiple video reproduced image to which the present technology is applied;
FIG. 6 is a functional block diagram of a coding processing section for performing parameter transcoding;
FIG. 7 is a diagram of assistance in explaining an example in which instructions for various changes in video contents are given;
FIG. 8 is a diagram of assistance in explaining an example in which instructions for various changes in video contents are given;
FIG. 9 is a flowchart of assistance in explaining a channel list updating (generating) process;
FIG. 10 is a flowchart of assistance in explaining a starting process on a client side;
FIG. 11 is a flowchart of assistance in explaining a video content changing process;
FIG. 12 is a flowchart of assistance in explaining a viewing arrangement request receiving process;
FIG. 13 is a flowchart of assistance in explaining a viewing arrangement request corresponding process;
FIG. 14 is a flowchart of assistance in explaining a multiple video reproduced image generating process;
FIG. 15 is a flowchart of assistance in explaining a content changing process;
FIG. 16 is a flowchart of assistance in explaining a position changing process;
FIG. 17 is a flowchart of assistance in explaining a parameter transcoding process; and

FIG. 18 is a block diagram showing an example of configuration of one embodiment of a computer to which the present technology is applied.

[Example of Configuration of Multiple Video Reproducing System]

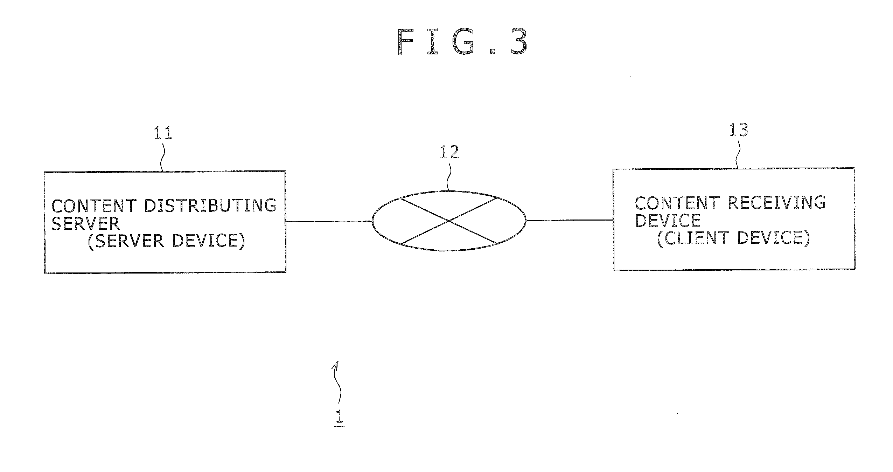

FIG. 3 shows an example of configuration of one embodiment of a multiple video reproducing system to which the present technology is applied.

The multiple video reproducing system 1 as an image processing system includes a content distributing server 11 for distributing video contents and a content receiving device 13 connected to the content distributing server 11 via a network 12.

The content distributing server 11 synthesizes a plurality of video contents into one screen, converts the screen into stream data of one stream, and distributes the stream data of one stream to the content receiving device 13 as a client. The content receiving device 13 receives the stream data of one stream distributed by the content distributing server 11 via the network 12 such as the Internet or the like. The content receiving device 13 then displays an image (multiple video reproduced image) based on the received stream data of one stream on a display section such as a liquid crystal display or the like possessed by the content receiving device 13 or a display device connected to the content receiving device 13. The content receiving device 13 can be formed by a television receiver having a network connecting function, an STP (Set Top Box), or a personal computer, for example.

Incidentally, while FIG. 3 shows only one content receiving device 13, a plurality of (a large number of) content receiving devices 13 are connected to the network 12, and the content distributing server 11 performs multicast transmission of the stream data of one stream to the plurality of content receiving devices 13.

[Method of Generating Multiple Video Reproducing Image]

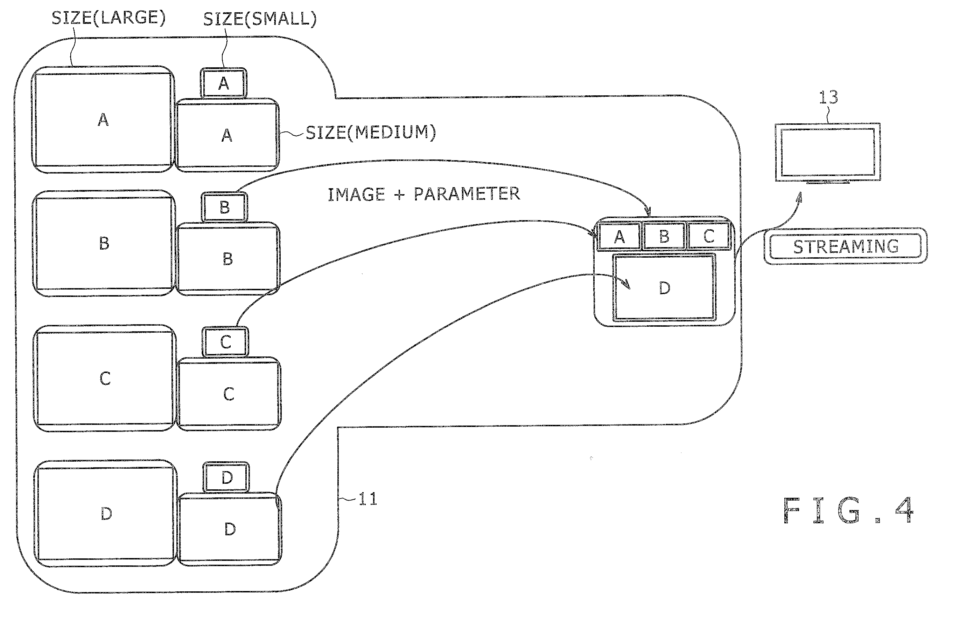

A method of generating a multiple video reproduced image by the content distributing server 11 will be described with reference to FIG. 4 by taking as an example a case where a multiple video reproduced image for simultaneously displaying four video contents, that is, video contents A, B, C, and D is generated.

The content distributing server 11 encodes each of a plurality of distributable video contents in a plurality of kinds of display sizes by a predetermined encoding system such as MPEG-2 (MPEG stands for Moving Picture Experts Group), AVC (MPEG-4 Part 10 (Advanced Video Coding)), or the like, thus creates a plurality of pieces of stream data for the different display sizes in advance, and stores the plurality of pieces of stream data. For example, the content distributing server 11 creates stream data for each of a large size, a medium size, and a small size for the video content A. The content distributing server 11 similarly creates stream data for each of the large size, the medium size, and the small size also for the video contents B, C, and D. In the following, the large size, the medium size, and the small size will be described as a size (large), a size (medium), and a size (small), respectively. Incidentally, the size (large) corresponds to a screen size. The kinds of prepared sizes are determined in advance.

When generating a multiple video reproduced image composed of the video contents A, B, and C of the size (small) and the video content D of the size (medium) as shown in FIG. 4, the content distributing server 11 generates the multiple video reproduced image using a plurality of streams for the different sizes which streams have been created in advance.

Specifically, the content distributing server 11 creates the stream data of one stream of the multiple video reproduced image to be distributed by selecting stream data for predetermined sizes of the plurality of video contents as an object of synthesis according to an arrangement (display position) on a screen and performing parameter transcoding.

Parameter transcoding in this case refers to a coding process in which an information parameter obtained by decoding is sent to an encoder in a subsequent stage, and in which the encoder omits an intra/inter type determining process, a block size determining process, a motion vector (MV information) calculating process, and an intra prediction mode determining process, determines a new quantization value, and thereafter subjects image data (difference image data) to a DCT (Discrete Cosine Transform) process and a quantizing process using the sent information parameter as it is. The information parameter is for example macroblock (MB) type information (an intra type or an inter type), block size information, MV information, an intra prediction mode, and the like.

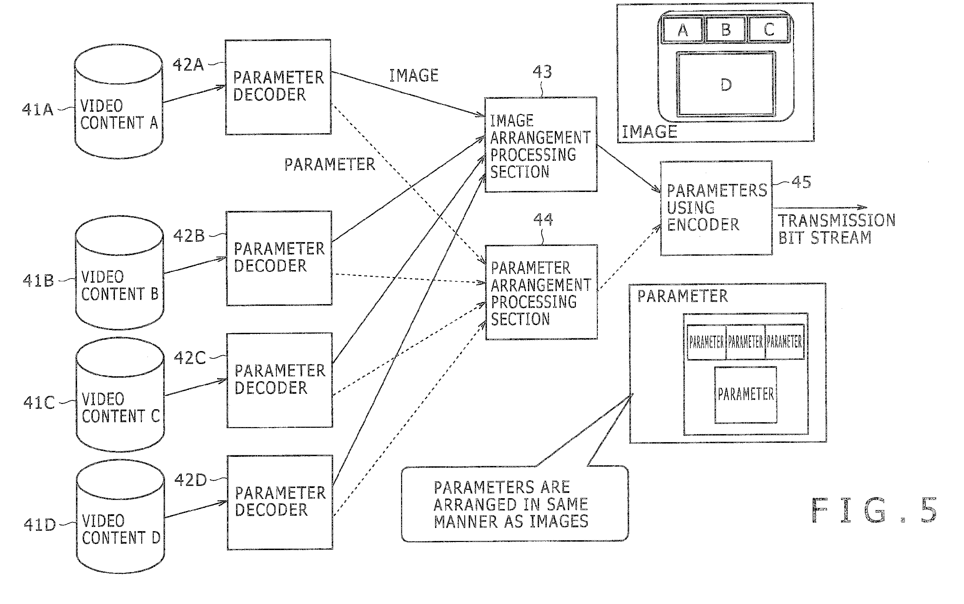

FIG. 5 is a conceptual functional block diagram of the generation of a multiple video reproduced image according to an embodiment of the present technology using parameter transcoding.

A content storing section 41A such as a hard disk or the like stores stream data for the respective sizes of the size (large), the size (medium), and the size (small), which stream data has been created in advance for the video content A. A content storing section 41B stores stream data for the size (large), the size (medium), and the size (small) for the video content B. A content storing section 41C and a content storing section 41D similarly store stream data for the size (large), the size (medium), and the size (small) for the video content C and the video content D.

In a case where a multiple video reproduced image composed of the video contents A, B, and C of the size (small) and the video content D of the size (medium) is generated, a parameter decoder 42A obtains the stream data for the size (small) of the video content A from the content storing section 41A. Then, the parameter decoder 42A obtains image data and an information parameter by decoding the input stream data, and supplies the image data to an image arrangement processing section 43 and supplies the information parameter to a parameter arrangement processing section 44.

A parameter decoder 42B obtains the stream data for the size (small) of the video content B from the content storing section 41B. Then, the parameter decoder 42B obtains image data and an information parameter by decoding the input stream data, and supplies the image data to the image arrangement processing section 43 and supplies the information parameter to the parameter arrangement processing section 44.

The processing of the parameter decoder 42C is similar to that of the parameter decoder 42B except that stream data as an object of the processing of the parameter decoder 42C is the stream data of the size (small) of the video content C.

The parameter decoder 42D obtains the stream data of the size (medium) of the video content D from the content storing section 41D. Then, the parameter decoder 42D obtains image data and an information parameter by decoding the input stream data, and supplies the image data to the image arrangement processing section 43 and supplies the information parameter to the parameter arrangement processing section 44.

The image arrangement processing section 43 divides the multiple video reproduced image into predetermined macroblock units. When attention is directed to each macroblock of interest, the image arrangement processing section 43 selects image data to be output to a parameter using encoder 45 in a subsequent stage according to the video content disposed in the position of the macroblock of interest.

Specifically, when the position of the macroblock of interest in the multiple video reproduced image to be generated is a region in which the video content A is disposed, the image arrangement processing section 43 outputs the image data supplied from the parameter decoder 42A to the parameter using encoder 45.

In addition, when the position of the macroblock of interest in the multiple video reproduced image to be generated is a region in which the video content B is disposed, the image arrangement processing section 43 outputs the image data supplied from the parameter decoder 42B to the parameter using encoder 45. The same is also true for regions in which the video content C and the video content D are disposed.

The parameter arrangement processing section 44 performs similar processing to that of the image arrangement processing section 43 for information parameters.

Specifically, when the position of the macroblock of interest in the multiple video reproduced image to be generated is the region in which the video content A is disposed, the parameter arrangement processing section 44 outputs the information parameter supplied from the parameter decoder 42A to the parameter using encoder 45.

In addition, when the position of the macroblock of interest in the multiple video reproduced image to be generated is the region in which the video content B is disposed, the parameter arrangement processing section 44 outputs the information parameter supplied from the parameter decoder 42B to the parameter using encoder 45. The same is also true for the regions in which the video content C and the video content D are disposed.

The parameter using encoder 45 is supplied with the image data and the information parameter of the video content A when the position of the macroblock of interest in the multiple video reproduced image to be generated is the region in which the video content A is disposed. In addition, the parameter using encoder 45 is supplied with the image data and the information parameter of the video content B when the position of the macroblock of interest in the multiple video reproduced image to be generated is the region in which the video content B is disposed. The same is also true for the regions in which the video content C and the video content D are disposed.

The parameter using encoder 45 performs DCT processing, quantization processing and the like on the image data using the sent information parameters.

Summarizing the above, the content distributing server 11 performs parameter transcoding from the stream of the video content A in macroblocks in the position in which the video content A is disposed in the multiple video reproduced image to be generated. In addition, the content distributing server 11 performs parameter transcoding from the stream of the video content B in macroblocks in the position in which the video content B is disposed. Similarly, the content distributing server 11 performs parameter transcoding from the stream of the video content C or D in macroblocks in the position in which the video content C or D is disposed.

Incidentally, while the content storing sections 41A to 41D in FIG. 5 have been described as separate and different content storing sections in order to facilitate understanding, the content storing sections 41A to 41D may be an identical content storing section 41. Similarly, the processing performed by the parameter decoders 42A to 42D may be performed by one parameter decoder 42.

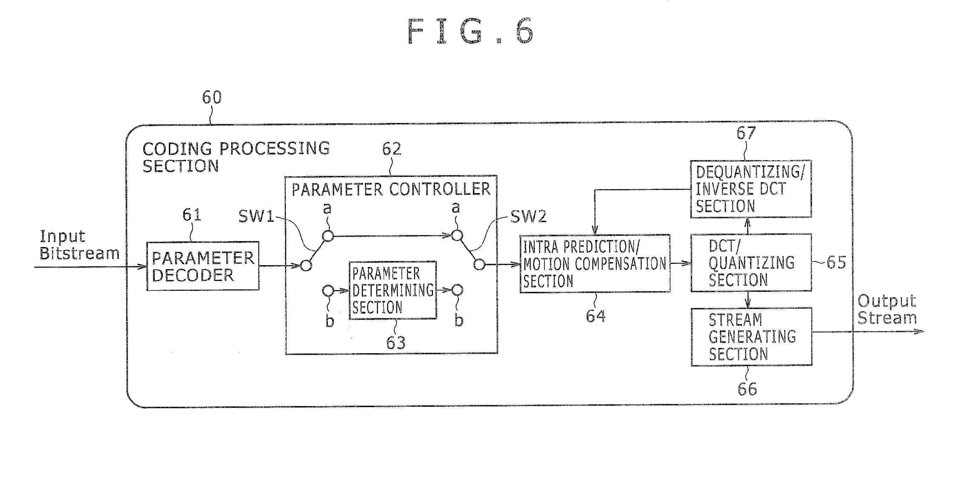

FIG. 6 is a functional block diagram of a coding processing section 60 for performing parameter transcoding.

A parameter decoder 61 is supplied with stream data of a predetermined size which stream data has been created in advance. The parameter decoder 61 decodes the input stream data, and supplies an information parameter and image data as a result of the decoding to a parameter controller 62.

The parameter controller 62 obtains the information parameter and the image data, determines whether normal encoding is necessary or not, and switches internal switches SW1 and SW2. More specifically, when the parameter controller 62 determines that normal encoding is not necessary, the parameter controller 62 connects the switches SW1 and SW2 to an a-side to supply the obtained information parameter and the obtained image data to an intra prediction/motion compensation section 64 in a subsequent stage as they are. When the parameter controller 62 determines that normal encoding is necessary, on the other hand, the parameter controller 62 connects the switches SW1 and SW2 to a b-side to supply the obtained information parameter and the obtained image data to a parameter determining section 63.

The parameter determining section 63 performs an intra/inter type determining process, a block size determining process, a motion vector calculating process, and an intra prediction mode determining process, and determines an information parameter, as in normal encoding. The determined information parameter and the image data are supplied to the intra prediction/motion compensation section 64.

The intra prediction/motion compensation section 64 performs a process of performing intra prediction (intra prediction processing) at the time of an intra prediction mode, and performs motion compensation processing at the time of an inter prediction mode.

A DCT/quantizing section 65 subjects the image data (difference image data) supplied from the intra prediction/motion compensation section 64 to an orthogonal transform, and performs DCT processing for obtaining transform coefficients. In addition, the DCT/quantizing section 65 performs quantization processing for quantizing the obtained transform coefficients.

A stream generating section 66 performs reversible coding such as variable length coding, arithmetic coding or the like of the image data after the quantization, and generates and outputs a coded stream as a result of the reversible coding. The variable length coding includes CAVLC (Context-Adaptive Variable Length Coding) defined in an H.264/AVC system and the like. The arithmetic coding includes CABAC (Context-Adaptive Binary Arithmetic Coding) and the like. Information indicating the intra prediction mode or information indicating the inter prediction mode, a quantization parameter, and the like are multiplexed as a part of header information of the coded data.

A dequantizing/inverse DCT section 67 dequantizes the quantized transform coefficients supplied from the DCT/quantizing section 65, and further subjects the obtained transform coefficients to an inverse orthogonal transform. In other words, the dequantizing/inverse DCT section 67 performs dequantization processing and inverse DCT processing by a method corresponding to the DCT processing and the quantization processing performed by the DCT/quantizing section 65.

[Processing for Change in Viewing Arrangement]

According to the generation of a multiple video reproduced image using parameter transcoding as described above, provision can be easily made even for cases in which an instruction to change video contents or to change the display position or display size of video contents is given.

In other words, a method of generating a multiple video reproduced image according to an embodiment of the present technology can make provision by classifying each of the video contents to be displayed into a case in which a display position is changed, a case in which a display size is changed, a case in which a video content is changed, and a case in which there is no change, for changes of video contents and the like in order to perform parameter transcoding without dependence between content regions, and performing a position changing process, a size changing process, a content changing process, and a no-change process, respectively.

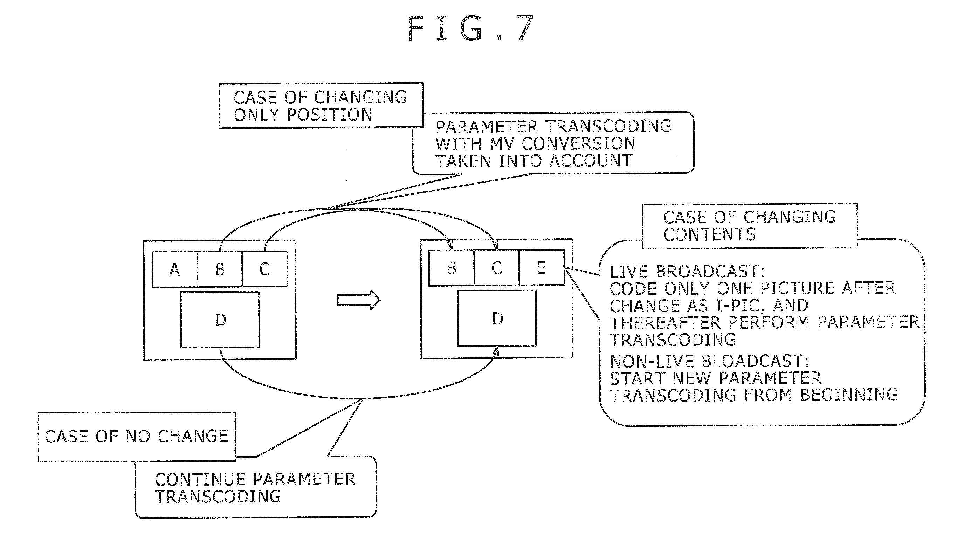

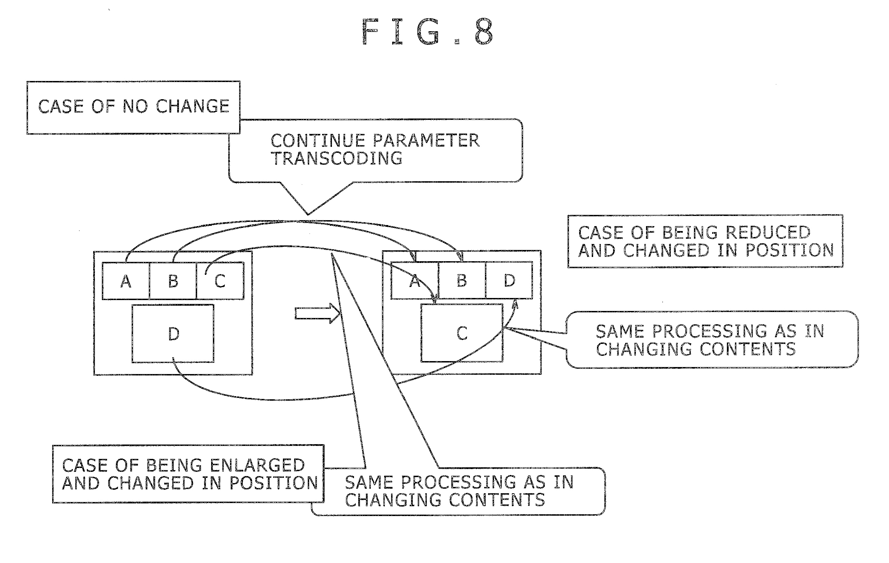

An example of various changes in video contents and provisions for the various changes will be described with reference to FIG. 7 and FIG. 8.

FIG. 7 shows an example of changing from a multiple video reproduced image of the video contents A, B, and C of the size (small) and the video content D of the size (medium) to a multiple video reproduced image of the video contents B, C, and E of the size (small) and the video content D of the size (medium).

The video contents B and C are changed only in display position. Thus, for the video contents B and C, the content distributing server 11 performs a parameter transcoding process with an MV (motion vector) conversion taken into account as the position changing process. Incidentally, intra coding may be performed for a macroblock to which a PMV (predictive motion vector) does not apply when the parameter transcoding process with MV conversion taken into account is performed.

The video content D is unchanged. In this case, the content distributing server 11 continues performing a parameter transcoding process similar to that before the change as a process corresponding to no change.

The video content A is changed to the video content E. In this case, a content changing process for changing to the video content E is performed. In the content changing process, different processes are performed for a live broadcast content and a non-live broadcast content. For a live broadcast content, when a first picture type after the change is a P-picture, the content distributing server 11 recodes the P-picture as an I-picture, and thereafter performs a parameter transcoding process. In this manner, a need to wait for an I-picture is eliminated. Thus, high response can be achieved. Image quality is completely restored to image quality at the time of normal parameter transcoding after a next I-picture. On the other hand, for a non-live broadcast content, the content distributing server 11 starts a new parameter transcoding process at the beginning of the content.

FIG. 8 shows an example of changing from a multiple video reproduced image of the video contents A, B, and C of the size (small) and the video content D of the size (medium) to a multiple video reproduced image of the video contents A, B, and D of the size (small) and the video content C of the size (medium).

The video contents A and B are unchanged. In this case, the content distributing server 11 continues performing a parameter transcoding process similar to that before the change as a process corresponding to no change.

The video content C is increased in display size from the size (small) to the size (medium), and is also changed in display position. In this case, the content distributing server 11 performs a process similar to the content changing process described above.

The video content D is decreased in display size from the size (medium) to the size (small), and is also changed in display position. In this case, the content distributing server 11 performs a process similar to the content changing process described above.

In this example, a change in display size always involves a change in display position. However, even if only display size is changed, provision can be made by the same process as the content changing process.

Respective processes performed by the content distributing server 11 and the content receiving device 13 described above will be described with reference to flowcharts.

[Flowchart of Channel List Updating Process]

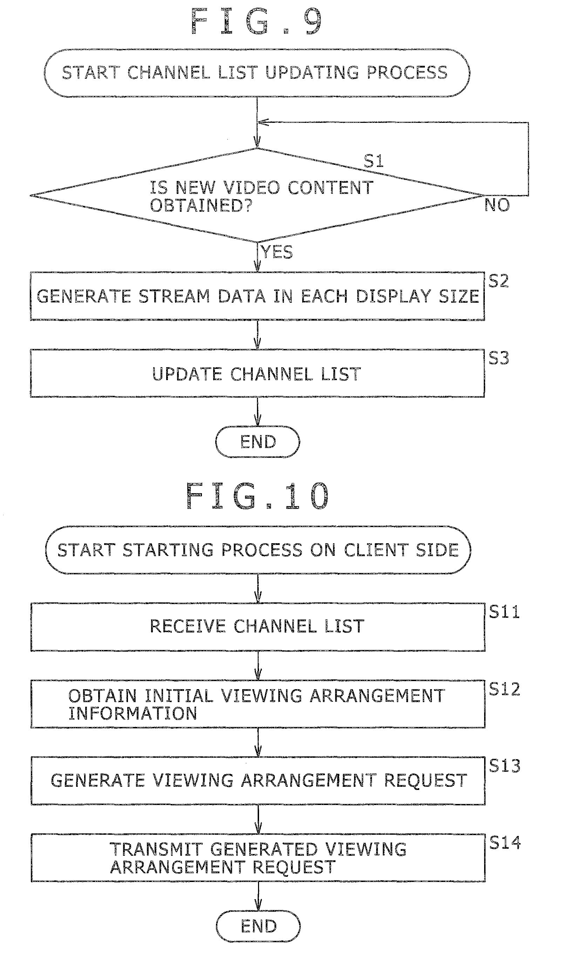

FIG. 9 is a flowchart of a channel list updating (generating) process performed when the content distributing server 11 obtains a new video content.

In first step S1 of this process, the content distributing server 11 determines whether a new video content is obtained. The content distributing server 11 repeats the process of step S1 until the content distributing server 11 determines that a new video content is obtained.

When it is determined in step S1 that a new video content is obtained, the process proceeds to step S2, where the content distributing server 11 generates stream data of the obtained new video content for respective display sizes of the size (large), the size (medium), and the size (small).

In step S3, the content distributing server 11 adds information on the obtained new video content to a channel list stored in the content storing section 41, thereby updating the channel list. When there is no channel list in the content storing section 41, the content distributing server 11 generates a channel list including the information on the obtained new video content, and stores the channel list in the content storing section 41.

That concludes the updating of the channel list.

[Flowchart of Starting Process]

FIG. 10 is a flowchart of a starting process when the content receiving device 13 on a client side is started.

In first step S11 of this process, the content receiving device 13 receives a channel list from the content distributing server 11. The content receiving device 13 may transmit a command requesting the transmission of the channel list and receive the channel list transmitted in response to the command, or may receive the channel list transmitted periodically or nonperiodically.

In step S12, the content receiving device 13 obtains initial viewing arrangement information defining the types and arrangement of a plurality of video contents displayed first as a multiple video reproduced image from a setting storing section not shown in the figures. For example, at the time of a first start immediately after the content receiving device 13 is manufactured, initial viewing arrangement information stored in the setting storing section in advance is obtained, and at the time of a second or subsequent start, initial viewing arrangement information corresponding to a last state when a multiple video reproduced image was previously displayed is obtained.

In step S13, the content receiving device 13 generates a viewing arrangement request for requesting the multiple video reproduced image based on the obtained initial viewing arrangement information from the content distributing server 11.

For example, the viewing arrangement request can be generated in the following format including the number of contents and a content area (arrangement area) represented by a content identifier for identifying each content and diagonal coordinates.

[Number (N) of Contents, Content 1 Identifier, Content 1 Position (an upper left x-coordinate, an upper left y-coordinate, a lower right x-coordinate, and a lower right y-coordinate), Content 2 Identifier, Content 2 Position (an upper left x-coordinate, an upper left y-coordinate, a lower right x-coordinate, and a lower right y-coordinate), ..., Content N Identifier, Content N Position (an upper left x-coordinate, an upper left y-coordinate, a lower right x-coordinate, and a lower right y-coordinate) ]

In step S14, the content receiving device 13 transmits the generated viewing arrangement request to the content distributing server 11, and then ends the process.

[Video Content Changing Process]

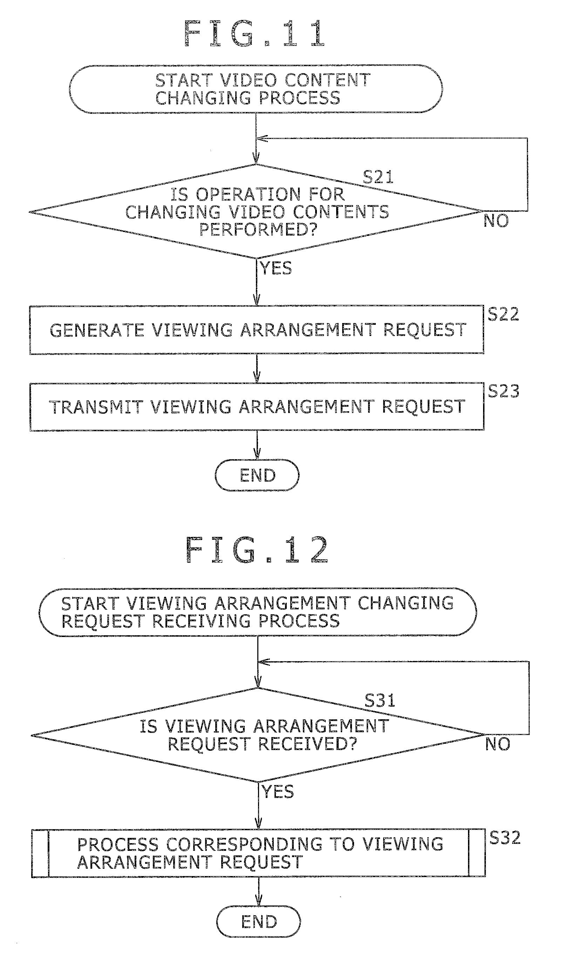

FIG. 11 is a flowchart of a video content changing process performed when a predetermined change is made to video contents forming a multiple video reproduced image after the multiple video reproduced image is displayed on the content receiving device 13 for a time.

In first step S21, the content receiving device 13 determines whether an operation for changing video contents is performed. The content receiving device 13 repeats the process of step S21 until the content receiving device 13 determines that an operation for changing video contents is performed.

When determining in step S21 that an operation for changing video contents is performed, the content receiving device 13 in step S22 generates a viewing arrangement request corresponding to the composition of a multiple video reproduced image after the change.

Then, in step S23, the content receiving device 13 transmits the generated viewing arrangement request to the content distributing server 11, and then ends the process.

[Viewing Arrangement Request Receiving Process]

FIG. 12 is a flowchart of a viewing arrangement request receiving process performed by the content distributing server 11 for the viewing arrangement request transmitted from the content receiving device 13 by the process of FIG. 10 or FIG. 11.

In first step S31, the content distributing server 11 determines whether the viewing arrangement request is received. The content distributing server 11 repeats the process of step S31 until the content distributing server 11 determines that the viewing arrangement request is received.

When determining in step S31 that the viewing arrangement request is received, the process proceeds to step S32, where the content distributing server 11 performs a viewing arrangement request corresponding process for generating (changing) a multiple video reproduced image according to the viewing arrangement request. Then the process is ended.

[Viewing Arrangement Request Corresponding Process]

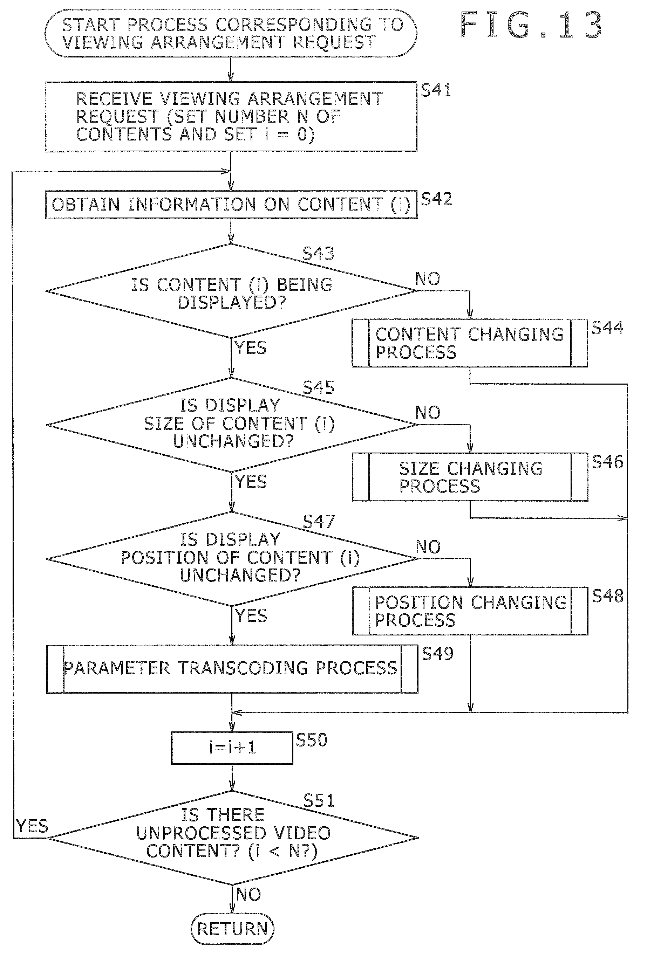

FIG. 13 is a detailed flowchart of the viewing arrangement request corresponding process performed in step S32 in FIG. 12.

In first step S41 of this process, the content distributing server 11 receives the viewing arrangement request transmitted from the content receiving device 13. The viewing arrangement request describes the number N of video contents and a content identifier for identifying each of the video contents and the display area (position and size) of each of the video contents. Accordingly, the content distributing server 11 sets the number N of contents on the basis of the received viewing arrangement request, and initializes a variable i indicating a video content by assigning zero to the variable i.

In step S42, the content distributing server 11 obtains information on an i-th content (hereinafter referred to as a content (i)). Specifically, the content distributing server 11 identifies a video content by a content identifier for the content (i), and identifies the display position and the display size of the video content, on the basis of the viewing arrangement request.

In step S43, the content distributing server 11 determines whether the content (i) is being displayed, that is, whether the content (i) was displayed also in a multiple video reproduced image before the viewing arrangement request was received.

When it is determined in step S43 that the content (i) is not being displayed, that is, that the content (i) is a video content selected to be newly displayed, the process proceeds to step S44, where the content distributing server 11 performs a content changing process.

When it is determined in step S43 that the content (i) is being displayed, that is, that the content (i) was displayed also in the multiple video reproduced image before the change, on the other hand, the process proceeds to step S45. In step S45, the content distributing server 11 determines whether the display size of the content (i) is changed.

When it is determined in step S45 that the display size of the content (i) is changed, the process proceeds to step S46, where the content distributing server 11 performs a size changing process for changing the display size of the content (i).

When it is determined in step S45 that the display size of the content (i) is not changed, on the other hand, the process proceeds to step S47, where the content distributing server 11 determines whether the display position of the content (i) is changed.

When it is determined in step S47 that the display position of the content (i) is changed, the process proceeds to step S48, where the content distributing server 11 performs a position changing process for changing the display position of the content (i). Incidentally, for a few frames (fields) during the period of referring to an image before the display position is changed, it is determined that the display position of the content (i) is changed, and the position changing process is performed.

When it is determined in step S47 that the display position of the content (i) is not changed, on the other hand, the process proceeds to step S49, where the content distributing server 11 continues performing a parameter transcoding process.

After the process of step S44, S46, S48, or S49, the content distributing server 11 increments the variable i by one in step S50, and advances the process to step S51.

In step S51, the content distributing server 11 determines whether there is an unprocessed video content, that is, whether the variable i is smaller than the number N of contents.

When it is determined in step S51 that there is an unprocessed video content, that is, that the variable i is smaller than the number N of contents, the process returns to step S42 to repeat the process from step S42 on down. That is, the process of steps S42 to S50 described above is performed for a next video content to be displayed in the multiple video reproduced image.

When it is determined in step S51 that there is no unprocessed video content, on the other hand, the viewing arrangement request corresponding process is ended, and a return is made to FIG. 12.

As described above, in the viewing arrangement request corresponding process, the content distributing server 11 performs processes corresponding to a case where a display position is changed, a case where a display size is changed, a case where a content is changed, and a case where there is no change, as described with reference to FIG. 7 and FIG. 8.

Incidentally, there is no multiple video reproduced image (video contents) before a change in relation to a viewing arrangement request transmitted first immediately after the content receiving device 13 as a client side is started, so that the process of step S49 is performed for all video contents.

[Process of Generating Multiple Video Reproduced Image in Macroblock Units]

The viewing arrangement request corresponding process described with reference to FIG. 13 is a process in a case where the generation of a multiple video reproduced image is considered in units of video contents.

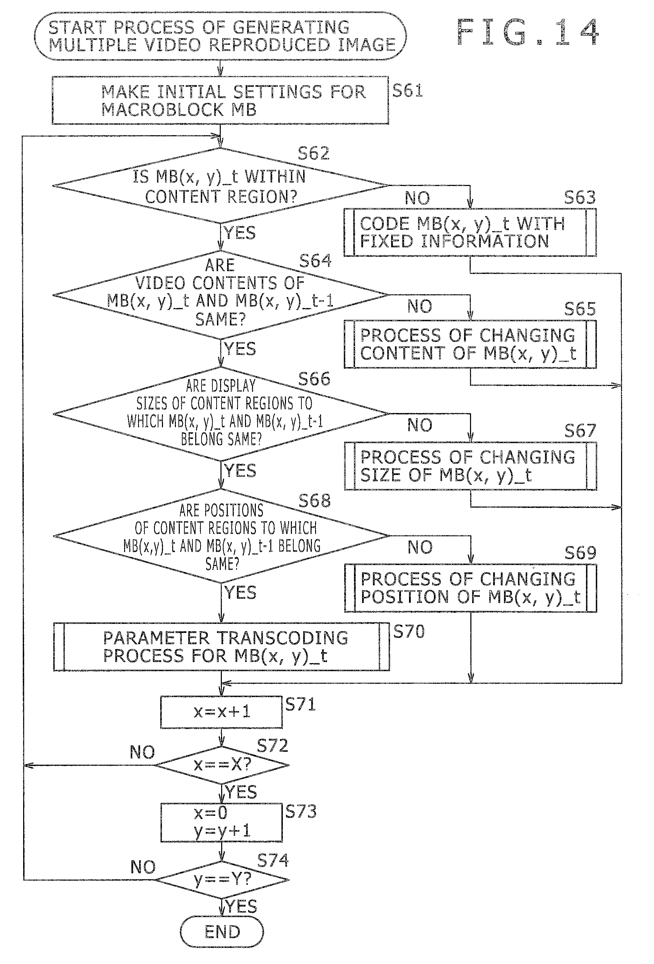

A process in a case where the generation of a multiple video reproduced image is considered in macroblock units will next be described with reference to FIG. 14. FIG. 14 is a flowchart of a multiple video reproduced image generating process for generating a (t-th) multiple video reproduced image at time t. A cycle of generating (updating) the multiple video reproduced image is a field cycle, for example.

In first step S61, the content distributing server 11 makes an initial setting for a macroblock MB of the multiple video reproduced image to be generated. Specifically, the content distributing server 11 sets "zero" as an initial value to variables x and y for identifying a macroblock MB to be processed. Suppose in the present embodiment that the multiple video reproduced image is divided into X macroblocks MB in a horizontal direction and Y macroblocks MB in a vertical direction, and that the boundaries of the macroblocks MB at least coincide with the boundaries of content regions in which video contents are arranged. Incidentally, in the following, a macroblock MB at the position of the variable x in the horizontal direction and the variable y in the vertical direction will be described as a macroblock MB(x, y).

In step S62, the content distributing server 11 determines whether a macroblock MB(x, y)_t at time t is within a content region in which a video content is arranged.

When it is determined in step S62 that the macroblock MB(x, y)_t at time t is not within a content region, the process proceeds to step S63, where the content distributing server 11 codes the macroblock MB(x, y)_t at time t with fixed information. The fixed information is for example image data for displaying a fixed black image or the like.

When it is determined in step S62 that the macroblock MB(x, y)_t at time t is within a content region, on the other hand, the process proceeds to step S64. In step S64, the content distributing server 11 determines whether the video contents of the macroblock MB(x, y)_t at time t and an immediately preceding macroblock MB(x, y)_t-1 at time t-1 are the same. The video contents at time t and at time t-1 being the same in this case does not refer to an identical image, but refers to a same program (content).

When it is determined in step S64 that the video contents of the macroblock MB(x, y)_t at time t and the macroblock MB(x, y)_t-1 at time t-1 are not the same, the process proceeds to step S65. Then, in step S65, the content distributing server 11 performs a content changing process for changing the video content of the macroblock MB(x, y)_t at time t.

When it is determined in step S64 that the video contents of the macroblock MB(x, y)_t at time t and the macroblock MB(x, y)_t-1 at time t-1 are the same, on the other hand, the process proceeds to step S66. In step S66, the content distributing server 11 determines whether the display sizes of content regions to which the macroblock MB (x, y)_t at time t and the macroblock MB(x, y)_t-1 at time t-1 belong are the same.

When it is determined in step S66 that the display sizes of the content regions are not the same, the process proceeds to step S67, where the content distributing server 11 performs a size changing process for changing the display size of the macroblock MB(x, y)_t at time t.

When it is determined in step S66 that the display sizes of the content regions are the same, on the other hand, the process proceeds to step S68. Then, in step S68, the content distributing server 11 determines whether the positions of the content regions to which the macroblock MB(x, y)_t at time t and the macroblock MB(x, y)_t-1 at time t-1 belong are the same.

When it is determined in step S68 that the positions of the content regions are not the same, the process proceeds to step S69, where the content distributing server 11 performs a position changing process for changing the position of the macroblock MB(x, y)_t at time t.

When it is determined in step S68 that the positions of the content regions are the same, on the other hand, the process proceeds to step S70, where the content distributing server 11 performs a parameter transcoding process for the macroblock MB(x, y)_t at time t.

After the process of step S63, S65, S67, S69, or S70, the process proceeds to step S71. In step S71, the content distributing server 11 increments the variable x by one, and advances the process to step S72.

In step S72, the content distributing server 11 determines whether the variable x is equal to the number X of macroblocks in the horizontal direction. When it is determined in step S72 that the variable x is not equal to the number X of macroblocks (the variable x is smaller than the number X of macroblocks), the process returns to step S62.

When it is determined in step S72 that the variable x is equal to the number X of macroblocks in the horizontal direction, on the other hand, the process proceeds to step S73, where the content distributing server 11 resets the variable x to "zero," and increments the variable y by one.

In step S74, the content distributing server 11 determines whether the variable y is equal to the number Y of macroblocks in the vertical direction. When it is determined in step S74 that the variable y is not equal to the number Y of macroblocks (the variable y is smaller than the number Y of macroblocks), the process returns to step S62.

When it is determined in step S74 that the variable y is equal to the number Y of macroblocks, on the other hand, the process is ended.

[Process of Changing Content of Macroblock MB(x, y)_t]

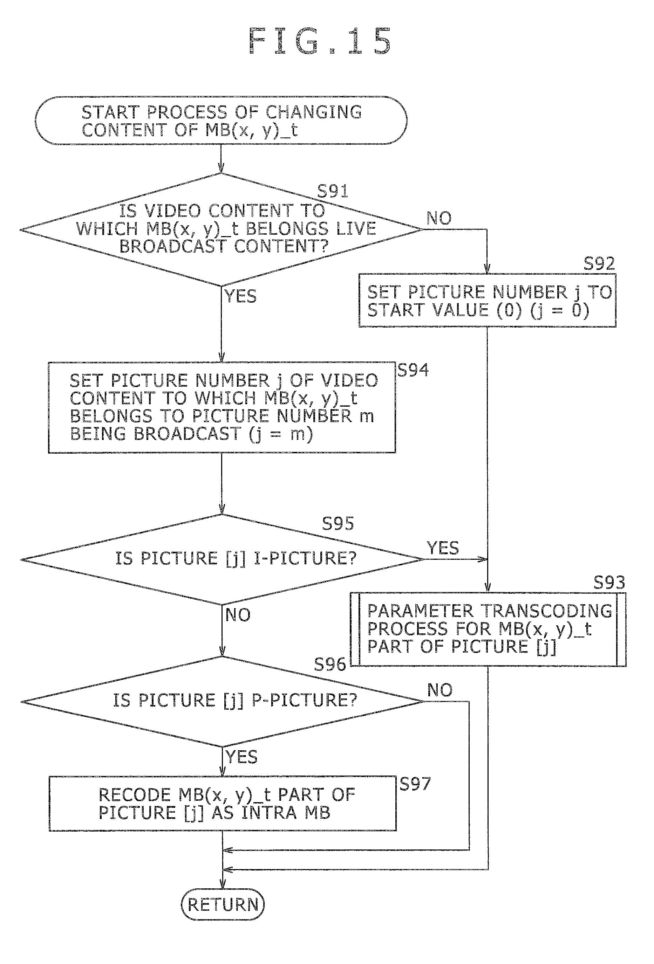

FIG. 15 is a detailed flowchart of the process of changing the content of the macroblock MB(x, y)_t, which process is performed in step S65 in FIG. 14.

In first step S91, the content distributing server 11 determines whether the video content to which the macroblock MB(x, y)_t belongs is a live broadcast content.

When it is determined in step S91 that the video content to which the macroblock MB(x, y)_t belongs is not a live broadcast content, the process proceeds to step S92, where the content distributing server 11 sets a picture number j of the video content to which the macroblock MB(x, y)_t belongs to a start value (0).

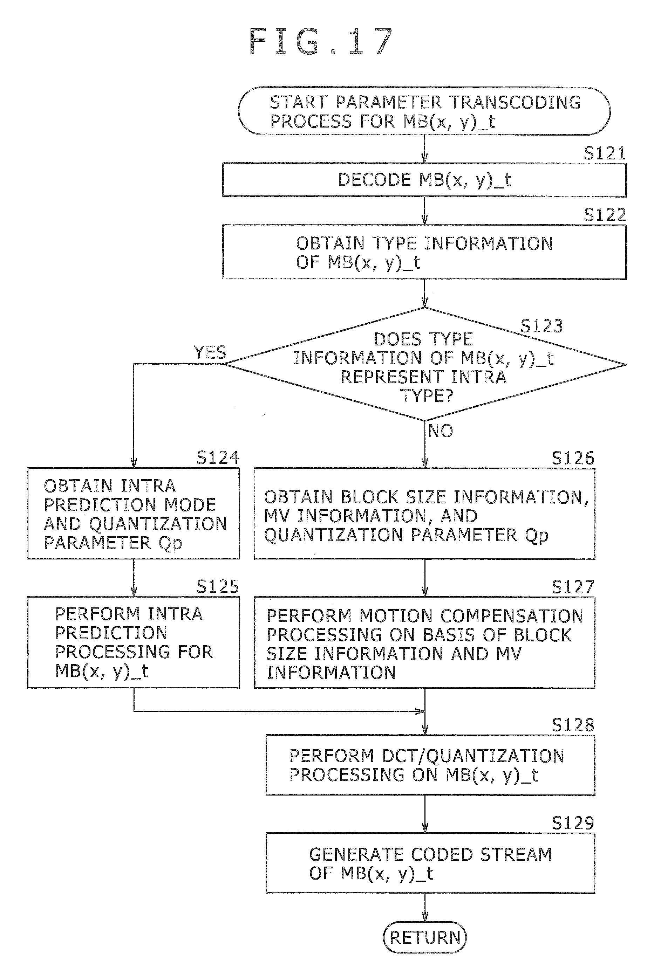

Then, in step S93, the content distributing server 11 performs a parameter transcoding process for a macroblock MB(x, y) part of the picture number j of the video content to which the macroblock MB(x, y)_t belongs. The macroblock MB(x, y) part of the picture number j refers to an image of a region corresponding to the macroblock MB(x, y)_t in a picture (image) of the picture number j. The process of step S93 is similar to the process of step S70 in FIG. 14, and will be described later with reference to FIG. 17. After the parameter transcoding process is performed, the process of changing the content of the macroblock MB(x, y)_t is ended, and a return is made to FIG. 14.

When it is determined in step S91 that the video content to which the macroblock MB(x, y)_t belongs is a live broadcast content, on the other hand, the process proceeds to step S94. In step S94, the content distributing server 11 sets the picture number j of the video content to which the macroblock MB(x, y)_t belongs to the picture number m of a picture being broadcast.

After step S94, the content distributing server 11 in step S95 determines whether the j-th picture (Picture[j]) is an I-picture.

When it is determined in step S95 that the j-th picture (Picture[j]) is an I-picture, the process proceeds to step S93 described above. Thus, a parameter transcoding process is performed for the macroblock MB(x, y) part of the j-th picture (Picture[j]).

When it is determined in step S95 that the j-th picture (Picture[j]) is not an I-picture, on the other hand, the process proceeds to step S96, where the content distributing server 11 determines whether the j-th picture (Picture[j]) is a P-picture.

When it is determined in step S96 that the j-th picture (Picture[j]) is not a P-picture, that is, that the j-th picture (Picture[j]) is a B-picture, the process of changing the content of the macroblock MB(x, y)_t is ended, and a return is made to FIG. 14.

When it is determined, in step S96 that the j-th picture (Picture[j]) is a P-picture, on the other hand, the process proceeds to step S97. In step S97, the content distributing server 11 recodes the macroblock MB(x, y) part of the j-th picture (Picture[j]) as an intra macroblock (intra MB). In this manner, the j-th picture (Picture[j]) is recoded as an I-picture, and the content receiving device 13 on the client side does not need to wait for an I-pictures. Thus, no delay occurs in reproduction, and high response can be achieved.

When the process of step S97 is ended, the process of changing the content of the macroblock MB(x, y)_t is ended, and a return is made to FIG. 14.

[Process of Changing Position of Macroblock MB(x, y)_t]

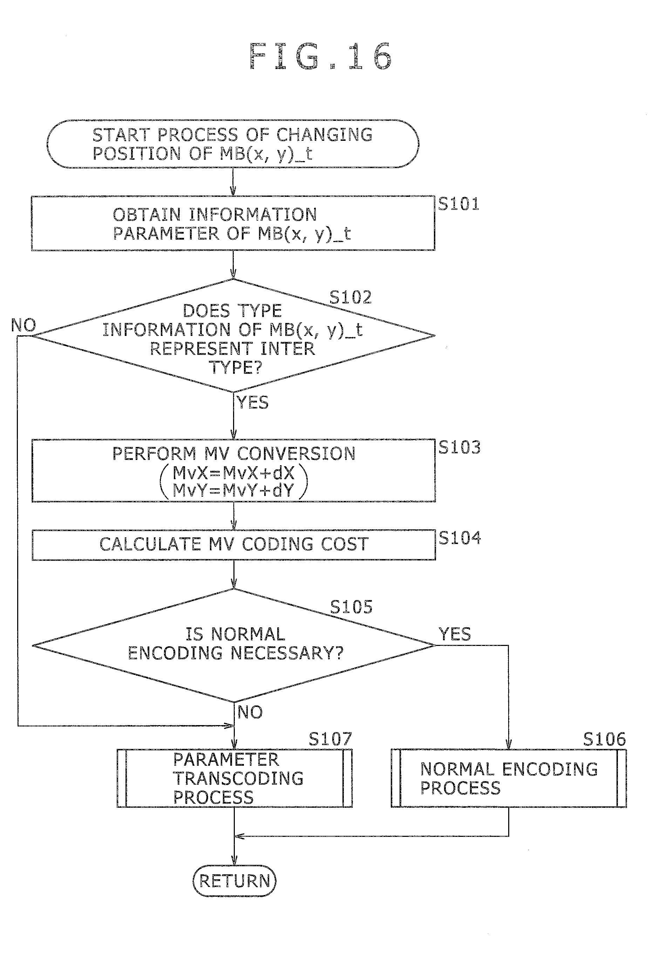

FIG. 16 is a detailed flowchart of the process of changing the position of the macroblock MB(x, y)_t, which process is performed in step S69 in FIG. 14.

In first step S101, the content distributing server 11 obtains the information parameter of the macroblock MB (x, y)_t.

In step S102, the content distributing server 11 determines whether the type information of the macroblock MB (x, y)_t represents an inter type.

When it is determined in step S102 that the type information of the macroblock MB(x, y)_t represents an inter type, the process proceeds to step S103, where the content distributing server 11 performs MV conversion for the macroblock MB(x, y)_t. Specifically, letting (MvX, MvY) be an original motion vector of the macroblock MB(x, y)_t, and letting (dX, dY) be an amount of movement from a position before the change to a position after the change, the content distributing server 11 sets (MvX + dX, MvY + dY) as a new motion vector of the macroblock MB(x, y)_t.

In step S104, the content distributing server 11 calculates an MV coding cost (MV_Cost). For example, the content distributing server 11 calculates the MV coding cost by the following equation adopted by a JM (Joint Model) as reference software in an AVC system.

$$\lambda = f(Qp), \ R = (Mv\_X - PMV\_X) + (Mv\_Y - PMV\_Y)$$

$\lambda$ is a Lagrange multiplier given as a function of a quantization parameter Qp. R denotes an amount of code generated. (PMV_X, PMV_Y) denotes a prediction motion vector.

In step S105, the content distributing server 11 determines whether intra coding by normal encoding needs to be performed on the basis of the calculated MV coding cost.

For example, the content distributing server 11 determines that intra coding by normal encoding needs to be performed when the calculated coding cost (MV_Cost) is higher than a predetermined threshold value Th1 and when a MAD (Mean Absolute Difference) of pixel values within the macroblock MB (x, y) t is smaller than a predetermined threshold value Th2 (MV_Cost > Th1 and MAD < Th2). The MAD is calculated by $\Sigma_{ij}|Y(i, j) - Ave\_Y|$ (Y (i, j) is a pixel value within the macroblock MB(x, y)_t, and Ave_Y is an average value of the pixel values within the macroblock MB (x, y)_t).

When it is determined in step S105 that intra coding by normal encoding needs to be performed, the process proceeds to step S106, where the content distributing server 11 performs intra coding of the macroblock MB (x, y)_t by normal encoding.

When it is determined in step S105 that intra coding by normal encoding does not need to be performed, on the other hand, the process proceeds to step S107, where the content distributing server 11 subjects the macroblock MB(x, y)_t to a parameter transcoding process with MV conversion taken into account. That is, the content distributing server 11 performs a parameter transcoding process for the macroblock MB(x, y)_t using the motion vector (MvX + dX, MvY + dY) after being updated which motion vector is calculated in step S103. Details of the parameter transcoding process will be described later with reference to FIG. 17.

Also when it is determined in step S102 described above that the type information of the macroblock MB(x, y) _t represents an intra type, on the other hand, the process proceeds to step S107, where a parameter transcoding process for the macroblock MB(x, y)_t is performed. However, MV conversion is not performed because the process of steps S103 to S105 is skipped.

When the normal encoding process of step S106 or the parameter transcoding process of step S107 is ended, the process of changing the position of the macroblock MB(x, y)_t is ended, and a return is made to FIG. 14.

[Parameter Transcoding Process for Macroblock MB(x, y)_t]

FIG. 17 is a detailed flowchart of the parameter transcoding process for the macroblock MB(x, y)_t, which process is performed in step S70 in FIG. 14. Incidentally, the process of step S93 in FIG. 15 and the process of step S107 in FIG. 16 are also the following process.

In first step S121, the content distributing server 11 decodes the macroblock MB(x, y)_t.

In step S122, the content distributing server 11 obtains the type information of the macroblock MB(x, y)_t.

Then, in step S123, the content distributing server 11 determines whether the type information of the macroblock MB(x, y)_t represents an intra type.

When it is determined in step S123 that the type information of the macroblock MB(x, y)_t represents an intra type, the process proceeds to step S124, where the content distributing server 11 obtains an intra prediction mode and a quantization parameter Qp.

In step S125, the content distributing server 11 subjects image data obtained by decoding the macroblock MB(x, y)_t to intra prediction processing in the obtained intra prediction mode.

When it is determined in step S123 that the type information of the macroblock MB(x, y)_t represents an inter type, on the other hand, the process proceeds to step S126, where the content distributing server 11 obtains block size information, MV information, and a quantization parameter Qp.

In step S127, the content distributing server 11 subjects the image data obtained by decoding the macroblock MB(x, y)_t to motion compensation processing (MC processing) on the basis of the block size information and the MV information.

In step S128 after step S125 or step S127, the content distributing server 11 subjects the image data of the macroblock MB(x, y)_t to DCT processing, and subjects transform coefficients obtained as a result of the DCT processing to quantization processing using the quantization parameter Qp.

In step S129, the content distributing server 11 performs reversible coding of the image data after the quantization, and generates a coded stream obtained as a result of the reversible coding. Incidentally, the coded stream also includes the information parameter of the macroblock MB(x, y)_t.

That concludes the parameter transcoding process, and the process returns to FIG. 14.

As described above, the content distributing server 11 creates a plurality of pieces of stream data with different display sizes for all distributable video contents in advance, and stores the plurality of pieces of stream data. Then, on the basis of a received viewing arrangement request, the content distributing server 11 creates a multiple video reproduced image in which a plurality of pieces of video are arranged, as stream data of one stream by transcoding the stream data created in advance, and transmits the stream data of one stream to the content receiving device 13.

Thus, because the stream data of one stream is supplied from the content distributing server 11 to the content receiving device 13, the content receiving device 13 can display the multiple video reproduced image even if the content receiving device 13 is a device capable of reproducing only one stream.

An amount of parameter transcoding when the content distributing server 11 on a server side generates a multiple video reproduced image is basically equal to an amount of parameter transcoding when stream data of one kind of video content is created. Thus, high-speed processing can be performed as compared with a method of generating a multiple video reproduced image in the past. In addition, because there are a small number of cases of performing recoding after complete decoding, degradation in image quality can be suppressed.

That is, according to the multiple video reproducing system 1, it is possible to provide a multiple video reproducing system with a light processing load and a little degradation in image quality.

The series of processes described above can be carried out not only by hardware but also by software. When the series of processes is to be carried out by software, a program constituting the software is installed onto a computer. The computer includes a computer incorporated in dedicated hardware or for example a general-purpose personal computer that can perform various functions by installing various programs thereon.

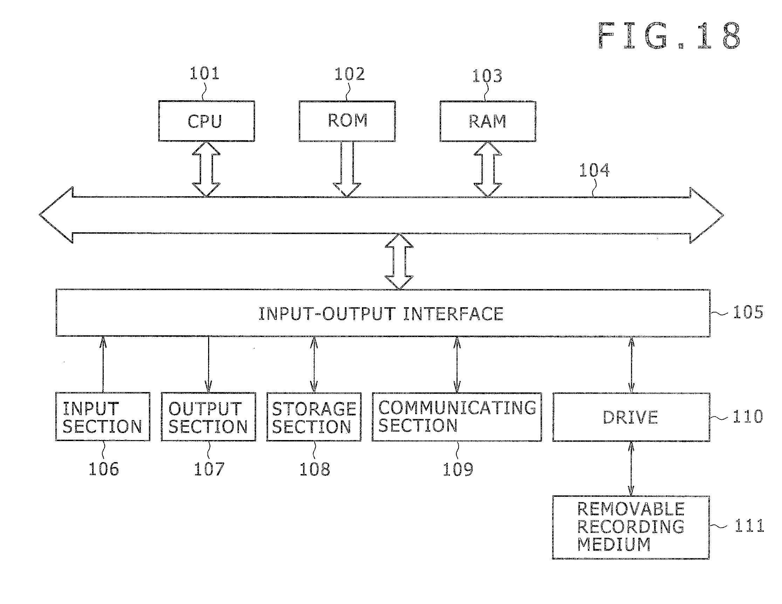

FIG. 18 is a block diagram showing an example of hardware configuration of a computer performing the series of processes described above by a program and functioning as the content distributing server 11 or the content receiving device 13.

In the computer, a CPU (Central Processing Unit) 101, a ROM (Read Only Memory) 102, and a RAM (Random Access Memory) 103 are interconnected by a bus 104.

The bus 104 is further connected with an input-output interface 105. The input-output interface 105 is connected with an input section 106, an output section 107, a storage section 108, a communicating section 109, and a drive 110.

The input section 106 is formed by a keyboard, a mouse, a microphone and the like. The output section 107 is formed by a display, a speaker and the like. The storage section 108 is formed by a hard disk, a nonvolatile memory and the like. The communicating section 109 is formed by a network interface and the like. The drive 110 drives a removable recording medium 111 such as a magnetic disk, an optical disk, a magnetooptical disk, a semiconductor memory or the like.

In the computer configured as described above, the CPU 101 for example loads a program stored in the storage section 108 into the RAM 103 via the input-output interface 105 and the bus 104, and then executes the program. Thus, the series of processes described above is performed.

When the content distributing server 11 is formed by the computer, the CPU 101 for example performs a process of creating a plurality of pieces of stream data with different display sizes for each of a plurality of video contents in advance and a parameter transcoding process corresponding to the coding processing section 60. The storage section 108 stores the stream data with the plurality of display sizes of each of the video contents which stream data is created in advance. The communicating section 109 receives a viewing arrangement request from the content receiving device 13, and transmits the generated stream data to the content receiving device 13.

When the content receiving device 13 is formed by the computer, the CPU 101 for example creates a viewing arrangement request, and decodes the stream data of one stream, generates a multiple video reproduced image, and displays the multiple video reproduced image on a display section (output section 107). The communicating section 109 transmits the viewing arrangement request to the content distributing server 11, and receives the stream data of one stream transmitted from the content distributing server 11 and supplies the stream data to the CPU 101.

The program executed by the computer (CPU 101) is for example provided in a state of being recorded on the removable recording medium 111 as a packaged medium or the like. In addition, the program can be provided via a wired or wireless transmission medium such as a local area network, the Internet, digital satellite broadcasting or the like.

In the computer, the program can be installed into the storage section 108 via the input-output interface 105 by loading the removable recording medium 111 into the drive 110. In addition, the program can be received by the communicating section 109 via a wired or wireless transmission medium and installed into the storage section 108. Further, the program can be installed in the ROM 102 or the storage section 108 in advance.

It is to be noted that in the present specification, the steps described in the flowcharts may be not only performed in time series in the described order but also performed in parallel or in necessary timing such as at a time of a call being made, for example, without being necessarily performed in time series.

Incidentally, in the present specification, a system refers to an apparatus as a whole formed by a plurality of devices.

It is to be noted that embodiments of the present disclosure are not limited to the foregoing embodiments, and that various changes can be made without departing from the spirit of the present disclosure.

For example, in the foregoing embodiments, description has been made of an example in which a multiple video reproduced image is composed of three video contents of the size (small) and one video content of the size (medium). However, multiple video reproduced images are not limited to this example. In other words, the display sizes of video contents in a multiple video reproduced image and the number and arrangement of video contents displayed (viewed) simultaneously on one screen can be set as appropriate.

In addition, in the foregoing embodiments, the content distributing server 11 creates and stores the stream data with each size of all video contents to be synthesized by itself. However, a plurality of pieces of stream data with different display sizes which stream data is to be synthesized may be created by another server (computer), and the content distributing server 11 may obtain the stream data and generate a multiple video reproduced image. In addition, the content distributing server 11 may use a combination of stream data created by the content distributing server 11 itself and stream data obtained from another server.

Further, the above-described multiple video reproduced images are formed by a combination of video contents with different display sizes, but may be a combination of a plurality of video contents with only an identical size.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present application contains subject matter related to that disclosed in Japanese Priority Patent Application JP 2010-243394 filed in the Japan Patent Office on October 29, 2010, the entire content of which is hereby incorporated by reference.

**Claims**

**1.** An image processing device comprising:

a generating section, a plurality of pieces of stream data with different display sizes being created in advance for each of a plurality of video contents, configured to generate stream data of one stream of a multiple video reproduced image for simultaneously displaying not smaller than two video contents selected from said plurality of video contents by performing parameter transcoding using said stream data created in advance.

2. The image processing device according to claim 1,
   wherein said generating section classifies each of the video contents to be displayed into a case in which a display position is changed, a case in which a display size is changed, a case in which a video content is changed, and a case in which there is no change, for one of a change of said video content forming said multiple video reproduced image, a change in display size of said video content, and a change in display position of said video content, and performs a position changing process, a size changing process, a content changing process, and a no-change process, respectively.

3. The image processing device according to claim 2,
   wherein said generating section performs parameter transcoding with motion vector conversion taken into account in said position changing process.

4. The image processing device according to claim 2,
   wherein in said content changing process, when a video content after a change is a live broadcast content and a first picture type is a P-picture, said generating section recodes the P-picture into an I-picture, and subsequently performs parameter transcoding.

5. The image processing device according to claim 1, further comprising:

   a communicating section configured to receive a request for said not smaller than two video contents to be displayed as said multiple video reproduced image from another device, and transmitting the stream data of one stream of said multiple video reproduced image, the stream data being generated by said generating section, to said other device,
   wherein said generating section generates the stream data of one stream of said multiple video reproduced image on a basis of said request.

6. The image processing device according to claim 1, further comprising:

   a creating section creating said plurality of pieces of stream data with the different display sizes for each of said plurality of video contents; and
   a storing section storing the created said plurality of pieces of stream data with the different display sizes;
   wherein said generating section generates the stream data of one stream of said multiple video reproduced image using said plurality of pieces of stream data with the different display sizes, said plurality of pieces of stream data being stored in said storing section.

7. An image processing method comprising:

   a plurality of pieces of stream data with different display sizes being created in advance for each of a plurality of video contents, generating stream data of one stream of a multiple video reproduced image for simultaneously displaying not smaller than two video contents selected from said plurality of video contents by performing parameter transcoding using said stream data created in advance.

8. An image processing device wherein stream data of one stream of a multiple video reproduced image for simultaneously displaying a plurality of video contents, the stream data being created by parameter transcoding using stream data of said plurality of video contents, is received, and a predetermined displaying section is made to display said multiple video reproduced image on a basis of the received stream data of one stream of said multiple video reproduced image.

9. An image processing method comprising:

   receiving stream data of one stream of a multiple video reproduced image for simultaneously displaying a plurality of video contents, the stream data being created by parameter transcoding using stream data of said plurality of video contents; and
   making a predetermined displaying section display said multiple video reproduced image on a basis of the received stream data of one stream of said multiple video reproduced image.

**10.** An image processing system comprising:

a server device; and
a client device;
said server device including
a generating section configured to, a plurality of pieces of stream data with different display sizes being created in advance for each of a plurality of video contents, generate stream data of one stream of a multiple video reproduced image for simultaneously displaying not smaller than two video contents selected from said plurality of video contents by performing parameter transcoding using said stream data created in advance, and
a transmitting section configured to transmit the stream data of one stream of said multiple video reproduced image, the stream data being generated by said generating section, to said client device, and
said client device including
a receiving section configured to receive the stream data of one stream of said multiple video reproduced image, the stream data being transmitted by said transmitting section, and
a display controlling section configured to make a predetermined display section display said multiple video reproduced image on a basis of the received stream data of one stream of said multiple video reproduced image.

CLOUD(NETWORK)

NETWORK
USER

TV CHANNEL

STREAMING

TV CHAT

WEB SCREEN

MAIN VIDEO CONTENTS

VIDEO CONTENTS

FIG.1

EP 2 448 287 A1

FIG.2

EP 2 448 287 A1

# F I G . 3

FIG. 4

41A VIDEO CONTENT A

42A PARAMETER DECODER

IMAGE

41B VIDEO CONTENT B

42B PARAMETER DECODER

PARAMETER

41C VIDEO CONTENT C

42C PARAMETER DECODER

41D VIDEO CONTENT D

42D PARAMETER DECODER

43 IMAGE ARRANGEMENT PROCESSING SECTION

44 PARAMETER ARRANGEMENT PROCESSING SECTION

45 PARAMETERS USING ENCODER

TRANSMISSION BIT STREAM

A B C D

IMAGE

PARAMETER

PARAMETER PARAMETER PARAMETER

PARAMETER

PARAMETERS ARE ARRANGED IN SAME MANNER AS IMAGES

F I G . 5

# F I G . 6

CODING PROCESSING SECTION — 60

PARAMETER CONTROLLER — 62

PARAMETER DECODER — 61

SW1

SW2

a

a

b

b

a

PARAMETER DETERMINING SECTION — 63

DEQUANTIZING/ INVERSE DCT SECTION — 67

DCT/ QUANTIZING SECTION — 65

INTRA PREDICTION/ MOTION COMPENSATION SECTION — 64

STREAM GENERATING SECTION — 66

Input Bitstream

Output Stream

# FIG.7

EP 2 448 287 A1

CASE OF CHANGING
ONLY POSITION

PARAMETER TRANSCODING
WITH MV CONVERSION
TAKEN INTO ACCOUNT

CASE OF CHANGING
CONTENTS

| A | B | C |

D

| B | C | E |

D

LIVE BROADCAST:
CODE ONLY ONE PICTURE AFTER
CHANGE AS I-PIC, AND
THEREAFTER PERFORM PARAMETER
TRANSCODING

NON-LIVE BLOADCAST:
START NEW PARAMETER
TRANSCODING FROM BEGINNING

CASE OF NO CHANGE

CONTINUE PARAMETER
TRANSCODING

F I G . 8

CASE OF NO CHANGE

CONTINUE PARAMETER TRANSCODING

CASE OF BEING REDUCED AND CHANGED IN POSITION

SAME PROCESSING AS IN CHANGING CONTENTS

SAME PROCESSING AS IN CHANGING CONTENTS

CASE OF BEING ENLARGED AND CHANGED IN POSITION

# FIG.9

START CHANNEL LIST UPDATING PROCESS

IS NEW VIDEO CONTENT OBTAINED? — S1

NO

YES

GENERATE STREAM DATA IN EACH DISPLAY SIZE — S2

UPDATE CHANNEL LIST — S3

END

# FIG.10

START STARTING PROCESS ON CLIENT SIDE

RECEIVE CHANNEL LIST — S11

OBTAIN INITIAL VIEWING ARRANGEMENT INFORMATION — S12

GENERATE VIEWING ARRANGEMENT REQUEST — S13

TRANSMIT GENERATED VIEWING ARRANGEMENT REQUEST — S14

END

# FIG.11

START VIDEO CONTENT
CHANGING PROCESS

IS OPERATION FOR
CHANGING VIDEO CONTENTS
PERFORMED? — S21

NO

YES

GENERATE VIEWING ARRANGEMENT REQUEST — S22

TRANSMIT VIEWING ARRANGEMENT REQUEST — S23

END

# FIG.12

START VIEWING ARRANGEMENT CHANGING
REQUEST RECEIVING PROCESS

IS VIEWING ARRANGEMENT
REQUEST RECEIVED? — S31

NO

YES

PROCESS CORRESPONDING TO VIEWING
ARRANGEMENT REQUEST — S32

END

FIG.13

START PROCESS CORRESPONDING TO
VIEWING ARRANGEMENT REQUEST

RECEIVE VIEWING ARRANGEMENT
REQUEST (SET NUMBER N OF
CONTENTS AND SET i = 0) — S41

OBTAIN INFORMATION ON CONTENT (i) — S42

S43
IS CONTENT (i) BEING DISPLAYED? — NO → CONTENT CHANGING PROCESS — S44
YES

S45
IS DISPLAY SIZE OF CONTENT (i) UNCHANGED? — NO → SIZE CHANGING PROCESS — S46
YES

S47
IS DISPLAY POSITION OF CONTENT (i) UNCHANGED? — NO → POSITION CHANGING PROCESS — S48
YES

PARAMETER TRANSCODING PROCESS — S49

i=i+1 — S50

S51
IS THERE UNPROCESSED VIDEO CONTENT? (i < N?)
YES
NO

RETURN

26

FIG.14

START PROCESS OF GENERATING
MULTIPLE VIDEO REPRODUCED IMAGE

MAKE INITIAL SETTINGS FOR
MACROBLOCK MB — S61

S62
IS MB(x, y)_t WITHIN
CONTENT REGION?

NO → S63
CODE MB(x, y)_t WITH
FIXED INFORMATION

YES

S64
ARE
VIDEO CONTENTS OF
MB(x, y)_t AND MB(x, y)_t-1
SAME?

NO → S65
PROCESS OF CHANGING
CONTENT OF MB(x, y)_t

YES

S66
ARE DISPLAY
SIZES OF CONTENT REGIONS TO
WHICH MB(x, y)_t AND MB(x, y)_t-1
BELONG SAME?

NO → S67
PROCESS OF CHANGING
SIZE OF MB(x, y)_t

YES

S68
ARE POSITIONS
OF CONTENT REGIONS TO WHICH
MB(x,y)_t AND MB(x, y)_t-1 BELONG
SAME?

NO → S69
PROCESS OF CHANGING
POSITION OF MB(x, y)_t

YES

PARAMETER TRANSCODING
PROCESS FOR MB(x, y)_t — S70

x=x+1 — S71

NO ← S72
x==X?

YES

x=0
y=y+1 — S73

NO ← S74
y==Y?

YES

END

27

# FIG.15

START PROCESS OF CHANGING
CONTENT OF MB(x, y)_t

S91
IS VIDEO CONTENT TO
WHICH MB(x, y)_t BELONGS LIVE
BROADCAST CONTENT?

NO

YES

S92
SET PICTURE NUMBER j TO
START VALUE (0) (j = 0)

S94
SET PICTURE NUMBER j OF VIDEO
CONTENT TO WHICH MB(x, y)_t
BELONGS TO PICTURE NUMBER m
BEING BROADCAST (j = m)

S95
IS PICTURE [j] I-PICTURE?

YES

NO

S93
PARAMETER TRANSCODING
PROCESS FOR MB(x, y)_t
PART OF PICTURE [j]

S96
IS PICTURE [j] P-PICTURE?

NO

YES

S97
RECODE MB(x, y)_t PART OF
PICTURE [j] AS INTRA MB

RETURN

# FIG.16

```
        ┌──────────────────────────────────┐
        │  START PROCESS OF CHANGING       │
        │  POSITION OF MB(x, y)_t          │
        └──────────────────────────────────┘
                        │
        ┌──────────────────────────────────┐ S101
        │  OBTAIN INFORMATION              │
        │  PARAMETER OF MB(x, y)_t         │
        └──────────────────────────────────┘
                        │
                  ╱─────────────╲  S102
        NO   ╱  DOES TYPE         ╲
    ◄───────  INFORMATION OF MB(x, y)_t
             ╲  REPRESENT INTER  ╱
               ╲    TYPE?      ╱
                  ╲─────────╱
                      │ YES
        ┌──────────────────────────────────┐ S103
        │  PERFORM MV CONVERSION           │
        │    ( MvX=MvX+dX )                │
        │    ( MvY=MvY+dY )                │
        └──────────────────────────────────┘
                        │
        ┌──────────────────────────────────┐ S104
        │  CALCULATE MV CODING COST        │
        └──────────────────────────────────┘
                        │
                  ╱─────────────╲  S105
                 ╱  IS NORMAL    ╲   YES
                ╲ ENCODING NECESSARY? ╱────────┐
                  ╲─────────────╱              │
                      │ NO                     │
        ┌──────────────────────┐ S107   ┌──────────────────────┐ S106
        │  PARAMETER           │        │  NORMAL ENCODING     │
        │  TRANSCODING         │        │  PROCESS             │
        │  PROCESS             │        │                      │
        └──────────────────────┘        └──────────────────────┘
                      │                         │
                      └────────────◄────────────┘
                              │
                        ( RETURN )
```

# FIG.17

```
┌─────────────────────────────────────┐
│  START PARAMETER TRANSCODING         │
│  PROCESS FOR MB(x, y)_t              │
└─────────────────────────────────────┘
                    │
                    ▼              S121
┌─────────────────────────────────────┐
│         DECODE MB(x, y)_t            │
└─────────────────────────────────────┘
                    │
                    ▼              S122
┌─────────────────────────────────────┐
│      OBTAIN TYPE INFORMATION         │
│      OF MB(x, y)_t                   │
└─────────────────────────────────────┘
                    │
                    ▼                            S123
           DOES TYPE
YES   INFORMATION OF MB(x, y)_t
       REPRESENT INTRA
            TYPE?
                    │ NO
```

**S124** — OBTAIN INTRA PREDICTION MODE AND QUANTIZATION PARAMETER Qp

**S126** — OBTAIN BLOCK SIZE INFORMATION, MV INFORMATION, AND QUANTIZATION PARAMETER Qp

**S125** — PERFORM INTRA PREDICTION PROCESSING FOR MB(x, y)_t

**S127** — PERFORM MOTION COMPENSATION PROCESSING ON BASIS OF BLOCK SIZE INFORMATION AND MV INFORMATION

**S128** — PERFORM DCT/QUANTIZATION PROCESSING ON MB(x, y)_t

**S129** — GENERATE CODED STREAM OF MB(x, y)_t

RETURN

30

# FIG.18

EP 2 448 287 A1

Europäisches
Patentamt

European
Patent Office

Office européen
des brevets

# EUROPEAN SEARCH REPORT

Application Number

EP 11 18 5565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 560 434 A2 (POLYCOM INC [US]) 3 August 2005 (2005-08-03) | 1-3,5-10 | INV. H04N21/2343 |
| Y | * figures 1-3, 5 * <br> * paragraph [0031] - paragraph [0035] * <br> * paragraph [0043] - paragraph [0061] * <br> * paragraph [0080] - paragraph [0102] * <br> * paragraphs [0120], [0131] * <br> ----- | 4 | H04N21/431 H04N21/485 H04N21/443 H04N7/26 H04N7/15 H04N21/4788 |
| Y | EP 1 633 120 A2 (NEC CORP [JP]) 8 March 2006 (2006-03-08) <br> * figures 2, 3, 5 * <br> * paragraph [0026] - paragraph [0059] * <br> * paragraph [0063] - paragraph [0067] * <br> ----- | 1,2,4,5, 7-10 | H04N21/61 |
| Y | US 2004/008249 A1 (NELSON STEVE [US] ET AL) 15 January 2004 (2004-01-15) <br> * figures 4, 6, 8, 12-14 * <br> * paragraph [0047] - paragraph [0061] * <br> * paragraph [0069] - paragraph [0070] * <br> ----- | 1,2,5, 7-10 | |
| Y | WO 2007/124163 A2 (DILITHIUM NETWORKS PTY LTD [AU]; MA ZHONGHUA [AU]; WANG JIANWEI [US];) 1 November 2007 (2007-11-01) | 4 | TECHNICAL FIELDS SEARCHED (IPC) |
| A | * figures 4-7 * <br> * paragraph [0039] - paragraph [0066] * <br> ----- | 1-3,5-10 | H04N H04L |
| A | CHIH-HUNG LI ET AL: "A Multiple-Window Video Embedding Transcoder Based on H.264/AVC Standard", EURASIP JOURNAL ON ADVANCES IN SIGNAL PROCESSING, HINDAWI PUBLISHING CORP, US, vol. 2007, no. 13790, 1 January 2007 (2007-01-01), pages 1-17, XP002657323, ISSN: 1687-6172, DOI: 10.1155/2007/13790 <br> * the whole document * <br> ----- | 1-10 | |

The present search report has been drawn up for all claims

| Place of search | Date of completion of the search | Examiner |
|---|---|---|
| Munich | 17 January 2012 | Döttling, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 5565

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2012

| Patent document cited in search report | | Publication date | Patent family member(s) | | Publication date |
|---|---|---|---|---|---|
| EP 1560434 | A2 | 03-08-2005 | EP 1560434 | A2 | 03-08-2005 |
| | | | US 2005157164 | A1 | 21-07-2005 |
| | | | US 2007120967 | A1 | 31-05-2007 |
| EP 1633120 | A2 | 08-03-2006 | CN 1741610 | A | 01-03-2006 |
| | | | EP 1633120 | A2 | 08-03-2006 |
| | | | JP 2006067124 | A | 09-03-2006 |
| | | | KR 20060053201 | A | 19-05-2006 |
| | | | KR 20070074510 | A | 12-07-2007 |
| | | | US 2006045363 | A1 | 02-03-2006 |
| US 2004008249 | A1 | 15-01-2004 | NONE | | |
| WO 2007124163 | A2 | 01-11-2007 | US 2007285500 | A1 | 13-12-2007 |
| | | | WO 2007124163 | A2 | 01-11-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002064818 A

- JP 2010243394 A